(19) Europäisches Patentamt

European Patent Office

Office européen des brevets

(11) **EP 1 223 718 B1**

(12) **EUROPEAN PATENT SPECIFICATION**

(45) Date of publication and mention
of the grant of the patent:
**01.12.2004 Bulletin 2004/49**

(51) Int Cl.⁷: **H04L 27/00**

(21) Application number: **01830015.2**

(22) Date of filing: **12.01.2001**

(54) **Method of communicating by means of chaotic signals**

Chaotische Signale verwendendes Kommunikationsverfahren

Procédé de communication par signaux chaotiques

(84) Designated Contracting States:
**DE FR GB IT**

(43) Date of publication of application:
**17.07.2002 Bulletin 2002/29**

(73) Proprietor: **STMicroelectronics S.r.l.**
**20041 Agrate Brianza (Milano) (IT)**

(72) Inventors:
 • **Occhipinti, Luigi**
  **97100 Ragusa (IT)**
 • **Fortuna, Luigi**
  **95121 Catania (IT)**
 • **Rizzo, Alessandro**
  **95024 Acireale (Catania) (IT)**
 • **Frasca, Mattia**
  **95121 Catania (IT)**

(74) Representative: **Bosotti, Luciano et al**
**c/o Buzzi, Notaro & Antonielli d'Oulx**
**Via Maria Vittoria 18**
**10123 Torino (IT)**

(56) References cited:
**WO-A-00/04685**          **WO-A-00/72541**

 • **CAPONETTO ET AL.: "Experimental study on chaotic synchronisation with non-ideal transmission channel" IEEE GLOBAL TELECOMMUNICATIONS CONFERENCE, 18 - 22 November 1996, pages 2083-2087, XP000748812 New York, US ISBN: 0-7803-3337-3**

## Description

Field of the invention

The present invention relates to a method of generating chaotic dynamics, usable for communications in noisy environments.

Description of the prior art

Modern communication systems, and in particular telecommunication systems, are usually classified according to factors such as the nature of the signal (digital, analogue) used by the said systems, the type of transmission, the transmission medium, the type of channel, and the nature of the receiver.

The basic objective of any communication system is to ensure that the information transmitted on the transmission channel is received correctly or, better still, efficiently. In fact, the purpose is to obtain, at the receiver end, information that is as close as possible to the information transmitted.

If an ideal transmission channel were available, no particular measures would have to be taken in order to achieve the above-mentioned result. However, all transmission channels have to reckon with some source of disturbance. The nature of this disturbance may vary according to the type of channel, the environmental and weather conditions in which the transmission takes place, and the frequency and nature (digital or analogue) of the signal. In addition, an important source of disturbance is represented by the possible presence of various transmitters operating concomitantly in the same environment. The various sources of information thus available are often indistinguishable by the receiver, so giving rise to problems of mismatching which frequently go well beyond normal problems of interference.

As far as transmission of digital signals, in particular, is concerned, it is envisaged that such signals, expressed in the form of a sequence of symbols, are converted into an analog waveform by a modulation process and are then transmitted on a corresponding channel. At the receiver end, a demodulator reconstructs the transmitted sequence of symbols. Transmission efficiency is normally identified as bit error probability, or bit error rate (BER), i.e., as the number of erroneous bits over the total of bits transmitted.

In order to keep BER low, it is known that symbol redundancy can be introduced, at the transmission end, upstream of the modulator. In this way, a larger number of symbols than would strictly be required is transmitted, which leads to an increased band occupation. The redundancy is added by a channel encoder and is removed by a channel decoder at the receiver end.

Another solution, which is not necessarily exclusive, for reducing BER consists in increasing the amount of energy associated to each symbol. This may be done by transmitting each symbol at a higher power or by protracting the duration of the transmission interval of each symbol.

A communication system may be defined "robust" when the information reconstructed at the receiver end from the signal passed over the channel is correct irrespective of the type of channel, the type of noise present on the channel, and other sources of disturbance.

The robustness of a communication system hence represents an element of fundamental importance when the conditions in which the communication is made are on the whole unsatisfactory or adverse.

One of the solutions developed for creating robust communication systems involves recourse to chaotic systems used in the framework of various transmission schemes.

By exploiting the properties of chaotic signals, in fact, information is transmitted on a noisy channel by means of a chaotic encoding with the known band-spread spectrum characteristics and the known advantages in terms of rejection of disturbance, interference and other noisy channel effects.

Basically, two main approaches to chaotic transmission may be distinguished.

It is possible, in fact, to adopt both coherent schemes based on synchronization between the transmitter and the receiver, and non-coherent schemes, which are not based on synchronization properties and which prove useful in the case of weak propagation, when synchronization may often get lost.

The latter transmission schemes, i.e., the non-coherent ones, are the ones more useful in the case of communications in high-noise environments: in fact, they do not call for synchronization between the transmitter and the receiver, and this enables better performance to be guaranteed in the presence of high noise levels.

Over the years, non-coherent schemes have undergone an evolution from very simple arrangements, such as the so-called Chaotic On-Off Keying (COOK) and Chaotic Shift Keying (CSK), towards more complex arrangements based on configurations of a differential type, such as Differential Chaos Shift Keying (DCSK) and Frequency Modulation Differential Chaos Shift Keying (FM-DCSK).

In most of the non-coherent techniques the transmitter is required to switch between transmission conditions of different chaotic attractors.

This result may be obtained by designing and implementing various chaotic systems, or else by using a chaotic system that admits of more than one attractor.

In the latter case, switching between the various attractors is normally achieved by fine tuning of the system parameters.

Very often this result is neither easy nor straightforward to achieve, especially in the case of chaotic communications where switching between the attractors must be performed in real time.

When dealing with real circuits, this corresponds in practice to changing at least one circuit parameter (for example, an RC couple), which results in rather complex operating criteria, above all in the case of integrated circuits.

Objects and summary of the present invention

There thus exists the need to provide means capable of generating chaotic signals that are able to meet, in a simple way, the needs highlighted above, in particular with reference to the possible application in real-time contexts and in relation to the possible implementation at the integrated-circuit level.

More specifically, the present invention relates to a communication process based on the generation of chaotic signals according to the preamble of Claim 1. A communication process of that kind is known, e.g. from WO-A- 00/04685 and, essentially, also from WO-A-00/72541.

According to the present invention, this purpose is achieved thanks to a communication method having the characteristics recalled specifically in the characterising portion of Claim 1.

In brief, the solution according to the invention involves the use of a modulator circuit, which is able to switch between various types of chaotic dynamics, according to the frequency of a command signal.

The invention overcomes the problem represented by the need to have available two or more chaotic circuits to switch between, or else the need to achieve a real-time fine tuning of the circuit parameters.

In the embodiment currently preferred, the invention, developed with particular attention paid to its possible application in a context of chaotic communication in noisy environments, is based upon a simple modification of the well-known Chua's circuit as this is described, for example, in the works by R.N. Madan, [1993], "*Chua's circuit: a paradigm for chaos*", World Scientific Series on Nonlinear Sciences, Series B, Vol. 1 (World Scientific, Singapore), and G. Manganaro, P. Arena, L. Fortuna, [1991], "*Cellular Neural Networks*: *Chaos, Complexity and VLSI Processing*", Springer-Verlag, ISBN 3-540-65203-7, the latter work being also important as regards the possible implementation at a cellular neural network (CNN) level.

The work by R. Caponetto et al.: "Experimental Study on Synchronisation With Non-Ideal Transmission Channel". IEEE GLOBAL TELECOMMUNICATIONS CONFERENCE, 18-22 November 1996, pages 2083-2087 is another document of interest for the invention.

Brief description of drawings

The invention will now be described, purely by way of non-limiting example, with reference to the attached drawings, in which:

- Figure 1 is a diagram of Chua's circuit modified according to the invention;
- Figure 2, which comprises six sections having the references (a) to (f), groups together various diagrams representing the behaviour of a circuit according to the invention;
- Figure 3 which comprises three sections having the references (a), (b) and (c), represents the behaviour of the same circuit in the presence of an increasing or decreasing driving frequency;
- Figure 4, which also comprises six sections having the references (a) to (f), represents the dynamic behaviour of the circuit according to the invention for different values of the driving frequency; and
- Figure 5 illustrates, in the form of a block diagram, the possible structure of a communication system operating according to the invention.

Detailed description of an exemplary embodiment of the invention

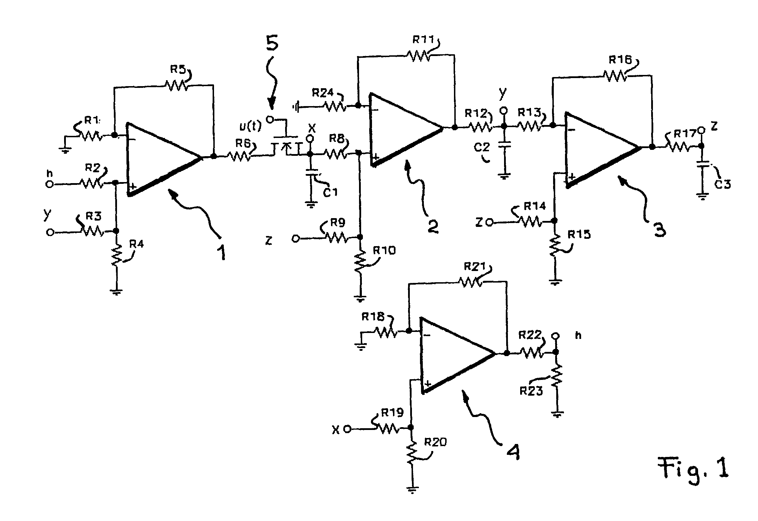

Figure 1 is the diagram of a possible embodiment of the circuit for generating chaotic signals, this scheme being known as a whole as a Chua's circuit. In particular, the diagram of Figure 1 shows how this previously known arrangement be modified to implement the invention.

The circuit is here illustrated in the possible embodiment as a state-controlled cellular neural network (SC-CNN), as is described, for example, in the work by Manganaro *et al.* referred to previously.

Basically, the Chua's circuit represented in Figure 1 is made up of essentially four cells or stages designated by 1, 2, 3, and 4. In particular, the cells 1 to 3 may be viewed as three cascaded cells, with the output signal of one cell supplying the input of the next cell. The cell 4 may instead be viewed as a sort of feedback element; note, in this regard, the connections with the cell 1 and the cell 2, designated by h and x, respectively.

The core of each of the cells 1 to 4 consists of a differential amplifier (in practice, an operational amplifier) negatively fedback between the respective output and the respective negative input. The corresponding circuit configuration, which comprises, in addition to the aforesaid operational amplifiers, resistors, designated by R1 to R24, as well as three capacitors, designated by C1 to C3, may be readily deduced from the diagram of Figure 1, and consequently does not require a detailed description herein.

In this connection, it should be recalled yet again that the Chua's circuit in question constitutes (except for the presence of the switch 5, which will be described hereinafter) an arrangement that is well known to the art. All of what has been said so far constitutes moreover just one example of the various possible embodiments of the invention.

With reference to its traditional implementation, the equations of the circuit represented in Figure 1 (with the exception, again, of the switch 5) are the ones represented in non-dimensional form by the following set of formulas:

$$dx/dt = \alpha[y - h(x)]$$

$$dy/dt = x - y + z$$

$$dz/dt = -\beta \cdot y$$

$$h(x) = m_1 \cdot x + 0.5 \cdot (m_0 - m_1) \cdot [|x + 1| - |x - 1|]$$

where x, y, z and h represent the signal values :

- at the inputs of stages (cells) 2 and 4,
- at the input of stage 3 (and 1),
- at inputs of stages 2 and 3 as well as the output of stage 3, and
- at the output of stage 4 and the input of stage 1, as better shown in Figure 1 of the drawing, and $\alpha$ and $\beta$ are multiplying parameters.

The possible embodiment of the invention proposed here (by way of currently preferred example) envisages precisely the insertion, on the connection between the output of the cell 1 and the input of the cell 2, of a switch 5 consisting, for example, of an electronic switch, such as a transistor.

The function of the switch 5 is basically that of separating selectively the cell 1 from the rest of the circuit in such a way as to enable switching of the circuit between a two-cell operating scheme and the traditional three-cell operating scheme, and vice versa. When a two-cell or three-cell operation is referred to, this corresponds to referring mainly to the three cells 1, 2 and 3 cascaded together in the diagram of Figure 1.

In particular, assuming the presence of the switch 5, the equations seen previously may be re-written in the following form:

$$dx/dt = u(t) \cdot \alpha[y - h(x)] + [1 - u(t)] \cdot (-x/\tau)$$

$$dy/dt = x - y + z$$

$$dz/dt = -\beta \cdot y$$

$$h(x) = m_1 \cdot x + 0.5 \cdot (m_0 - m_1) \cdot [|x + 1| - |x - 1|],$$

where the various symbols have the meaning indicated in the foregoing.

The modified circuit thus created differs from the traditional one by the presence of the quantities u(t) and $\tau$.

The signal u(t) corresponds to the command signal for opening and closing the switch 5. The signal u(t) can thus enable the circuit to switch between two different dynamics. The parameter $\tau$ represents the normalized time constant that regulates discharging of the capacitor associated to the variable x when the switch 5 is opened.

Preferably, the MOS transistor is driven so as to function in the non-linear regions. Consequently, it may be either open (off) or closed (on), depending upon the driving signal u(t) basically chosen as a square-wave signal, and, in particular as a square-wave signal with frequency $f_u$.

The values of the parameters in the second set of formulas are preferably implemented as follows:

| $\alpha = 9$ | $m_0 = -1/7$ |
|---|---|
| $\beta = 14.286$ | $m_1 = 2/7$ |

Such an implementation preserving the double-scroll type behaviour of the original system.

The value of $\tau$ is, instead, chosen as 150.

In practice, when the switch 5 (here represented by a MOS transistor) is closed, the circuit illustrated in Figure 1 corresponds to the normal Chua's circuit. Instead, when the switch 5 is open, the capacitor which integrates the first equation seen previously is isolated with respect to its current input, and consequently discharges.

This fact may be readily understood if it is noted that, in the case of u(t) = 1, the second set of equations seen previously corresponds exactly to the first set of equations, which describes the behaviour of the standard Chua's circuit.

Instead, when u(t) = 0 (switch open), the first equation of the second set of equations seen previously is uncoupled from the two subsequent equations.

Consequently, the arrangement described integrates a generator of chaotic signals which comprises a set of elements for signal generation - i.e., the cells 1 to 4 - connected together according to a scheme of chaotic dynamics for signal generation.

The switch 5 is inserted in the scheme of connection of the aforesaid elements and may be selectively switched between a closed state and an open state. When the switch 5 is in the open state, at least one part of the aforesaid signal-generating elements (in practice, the cell 1) is excluded from the connection scheme.

Opening and closing of the switch 5 thus determine variation in the chaotic dynamics of signal generation.

It will moreover be appreciated that, if the circuit of Figure 1 were to be kept constantly in the operating condition corresponding to opening of the switch 5, a dynamics of a chaotic type would not be obtained.

However, precisely on account of the fact that the signal u(t) undergoes switching (typically using as signal u(t) a square-wave signal with frequency $f_u$), it is possible to obtain different dynamics, as described in what follows.

For example, a number of experiments have been conducted by the applicant, causing the frequency $f_u$ of the waveform u(t) to vary from 250 Hz to 6 kHz. This range of frequencies constitutes the main part of the frequency spectrum of the Chua's circuit of Figure 1 implemented with the following resistances (expressed in ohm) and capacitances (expressed in farad):

| | |
|---|---|
| R1 = 4k | R13 = 8.2k |
| R2 = 13.3k | R14 = 100k |
| R3 = 5.6k | R15 = 7.8k |
| R4 = 20k | R16 = 100k |
| R5 = 20k | R17 = 1k |
| R6 = 380 | R18 = 75k |
| ------------- | R19 = 75k |
| R8 = 100k | R20 = 1000k |
| R9 = 100k | R21 = 1000k |
| R10 = 100k | R22 = 12.1k |
| R11 = 100k | R23 = 1k |
| R12 = 1k | R24 = 51.1k |
| | |
| C1 = 100nF | |
| C2 = 100nF | |
| C3 = 100nF | |

It has been found that the behaviour of the system is different in the case of low-frequency operation (250 Hz - 1 kHz) and operation at higher frequencies (1 kHz - 6 kHz).

In particular, when the frequency $f_u$ of u(t) is low, there remains the double-scroll type attractor typical of the Chua's circuit.

But if the frequency $f_u$ is increased, then only a single state attractor is visible.

When $f_u$ varies in this region, it is possible to note either a chaotic attractor or a periodic orbit.

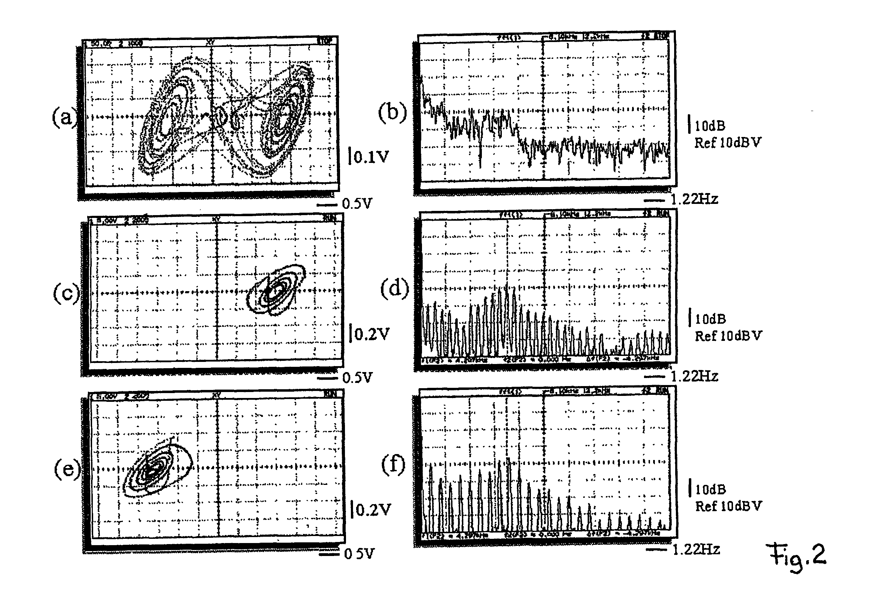

Figure 2 illustrates a number of examples of trajectories in the x-y phase plane, together with their respective spectra both for the original circuit and for the circuit switched by the signal u(t).

In particular, Figure 2(a) refers to the double-scroll attractor typical of the Chua's circuit, and Figure 2(b) corresponds to the fast Fourier transform (FFT) of the component x.

The diagrams of Figures 2(c) and 2(d) refer (again in relation to the behaviour in the x-y plane and to the FFT of the component x) to the behaviour found with a signal u(t) having a frequency $f_u$ of 488 Hz.

The diagrams of Figures 2(c) and 2(d) refer, instead, to the homologous behaviour found with a signal u(t) having a frequency $f_u$ of 356 Hz.

It has then been noted that the behaviour of the circuit shown in Figure 1 differs according to whether the frequency $f_u$ increases or decreases, thus revealing a hysteretic behaviour.

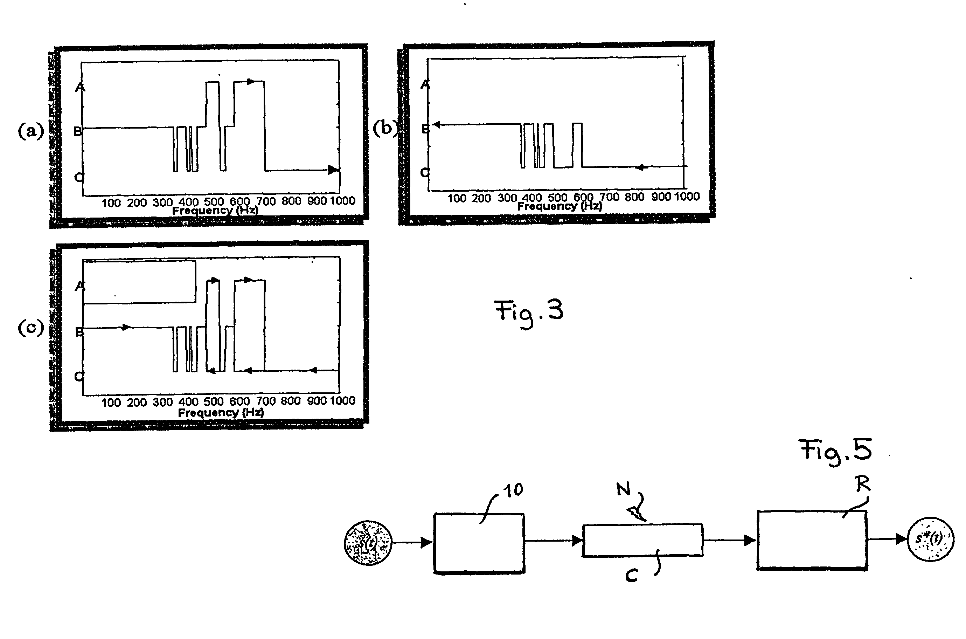

In particular, the diagram of Figure 3(a) shows the behaviour of the circuit when the frequency $f_u$ is increased starting from a value of 250 Hz up to 1 kHz.

The diagram of Figure 3(b) illustrates, instead, the behaviour of the circuit when the frequency $f_u$ is decreased starting from the value of 1 kHz down to 250 Hz.

The symbols A, B and C appearing on the ordinate correspond to three different behaviours that may be encountered (see again also Figure 2).

In particular, the regime A indicates that the state trajectory is bounded in the region x > 0.

The regime C refers, instead, to an attractor bounded in the region x < 0.

Finally, the regime B indicates that the trajectory is not bounded in either of the aforesaid regions.

It should be said that the analysis documented refers only to the region of the phase plane in which the attractor is confined, but, in itself, it does not indicate the presence of chaos.

Indeed, in a way irrespective of the region in which the dynamics evolves, it is possible to observe both chaotic behaviours and periodic behaviours. In fact, the diagram 3(b), which is obtained for decreasing frequencies, does not reveal the regime A.

There remains the fact that the behaviour of the circuit differs according to whether the frequency $f_u$ increases or decreases, a fact which reveals a hysteretic behaviour. This result is further highlighted in the diagram of Figure 3(c), which illustrates the behaviour of the circuit depending upon the frequency.

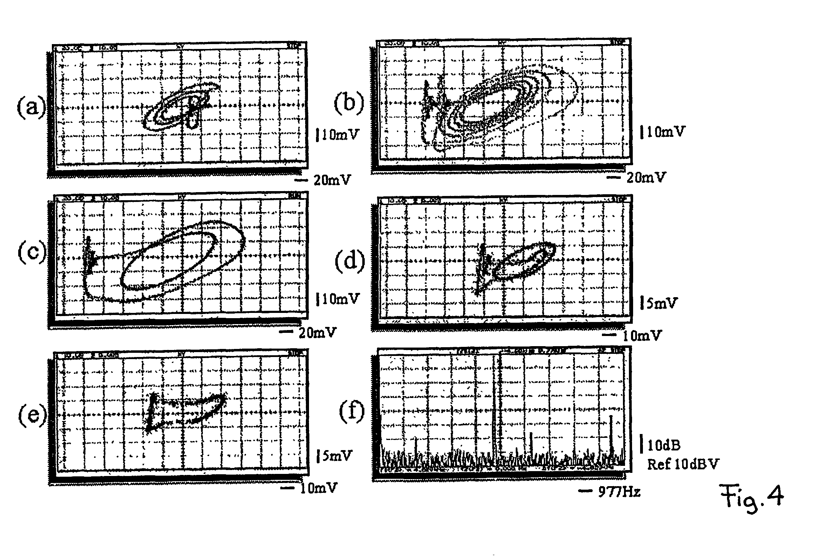

The considerations expressed above are confirmed also if the behaviour at higher frequencies (for example, from 1 kHz to 6 kHz) is observed, as emerges from the various parts of Figure 4.

In particular, the diagrams 4(a) to 4(e) correspond to the behaviour in the x-y plane for values of the frequency $f_u$ of the signal u(t) respectively of 700, 786, 1146, 1370, and 3250 Hz. The diagram 4(f) represents the FFT of the component x in the case of the diagram 4(e), namely, for $f_u$ = 3250 Hz.

As compared to the low-frequency behaviour, at least two differences may be noted.

In the first place, it may be noted that the oscillations of the system have smaller amplitudes than those obtained at low frequency. This fact can be seen clearly, for example, in the diagrams of Figures 4(d) and 4(e), where the difference in the scales may be seen. Furthermore, when the frequency $f_u$ increases above a certain value, the circuit tends to present a less chaotic behaviour, as may be seen in the diagrams of Figures 4(e) and 4(f). In this case, the oscillations are quite regular.

It should moreover be recalled that the diagram of Figure 1 - relating to an arrangement in which, except for the switch 5, the other elements of the circuit correspond to the traditional implementation of the Chua's circuit - constitutes just a possible example of application of the invention, in view of the fact that the same arrangement may be applied to circuits generating chaotic signals having an altogether different structure.

Figure 5 illustrates the possible application of such a circuit in the framework of a communication system.

It is assumed that in such a system a signal s(t) containing the information to be transmitted is sent on a transmission channel C (in general noisy owing to the presence of noise N) causing it to travel through the chaotic generator described previously and designated, as a whole, by 10.

The signal s(t) can be used as an frequency-modulation input signal, or else in the form of a digital signal used for controlling transition between different dynamics/attractors of a chaotic type.

The corresponding discriminator R (in practice, the receiver) is of a non-coherent type, in so far as it is able to reconstruct - as received signal s*(t) - the original signal s(t), the foregoing being based upon the transition noted in the chaotic signal received by the channel.

For example, with reference to Figure 2, the command signal s(t) may be chosen as a digital signal used for controlling, via the opening and closing command signal u(t) applied to the switch 5, the transition between the dynamics illustrated in Figures 2(c) and 2(d) and the dynamics illustrated in figures 2(e) and 2(f).

At this point, the chaotic signal received is simply discriminated by means of a voltage comparator, and the output signal s*(t) constitutes the reconstruction of the original signal s(t).

One use that is very advantageous (above all as regards the possibility of developing a "robust" transmission system) is based upon the exploitation of the hysteretic behaviour of the chaotic system (see in particular Figure 3).

In detail, when the latter arrangement is adopted, the frequency $f_u$ of the command signal u(t) is increased or decreased according to the digital information to be transmitted, for example, with reference to the binary transmission system, by increasing the frequency when the symbol to be transmitted is "1" and decreasing it when the symbol to be transmitted is "0".

In the above case it has been found that the transition time for passing from one chaotic attractor to another is in fact much shorter than the time corresponding to the frequency of the command signal itself and the deviation of the latter. Also in this case it is possible to use at the receiver end the non-coherent discriminator referred to previously.

The corresponding function of generating the signal u(t) as a signal with a frequency $f_u$ which increases or decreases (according to a law of linear ramp variation or according to a "chirp" law of a different type) as a function of the level assumed by the signal s(t) may be performed by components (such as a voltage-controlled oscillator - VCO) that can be readily integrated with the circuit represented in Figure 1.

In this connection, it will be moreover appreciated that the signal s(t) does not necessarily have to be a binary signal. The arrangement according to the invention is therefore suitable for being employed also in the framework of systems in which a number of information bits is associated to each symbol transmitted.

In general, assuming a uniform distribution of the frequency spectrum of the signal transmitted through the noisy channel, this being a characteristic mainly resulting from the use of chaotic signals, it is possible to guarantee the robustness of the communication scheme as regards channel noise, interference, multi-paths, and fading effects.

Of course, without prejudice to the principle of the invention, the details of construction and the embodiments may vary widely with respect to what is described and illustrated herein, without thereby departing from the scope of the present invention as defined in the attached claims.

**Claims**

1. A communication method based on the generation of chaotic signals, comprising the operations of:

   - providing a generator of chaotic signals (10) comprising a set of elements (1 to 4), which are connected together according to a scheme of chaotic dynamics of signal generation, the said generator further comprising at least one switch (5) inserted in the scheme of connection of said elements (1 to 4) and selectively switchable between a closed state and an open state; at least one (1) of said signal-generating elements (1 to 4) being excluded from said connection scheme when said at least one switch (5) is in one of said open and closed states, so that opening and closing of said switch (5) causes variation in the chaotic dynamics of generation of said signals, and

   - applying to said at least one switch (5) an opening and closing command signal (u(t)) corresponding to a modulating signal (s(t)), the variation in the chaotic dynamics of signal generation of said generator being thus dictated by said modulating signal (s(t)),

      **characterized in that** it comprises the operations of:

- using, as said modulating signal (s(t)), a signal adapted to assume a plurality of discrete levels; and

- associating, to each of said discrete levels, a corresponding different value of frequency ($f_u$) of said opening and closing command signal (u(t)), or

- causing, according to each of said discrete levels of said modulating signal, a corresponding variation in the frequency of said opening and closing command signal (u(t)).

2. The method according to Claim 1, **characterized in that** it comprises the operations of:

    - using, as said modulating signal (s(t)), a binary signal adapted to assume a first and a second level; and

    - generating said opening and closing command signal (u(t)) with a frequency which respectively increases and decreases depending on whether said binary modulating signal (s(t)) takes on said first or said second level.

3. The method according to either of Claims 1 or 2, **characterized in that** it further comprises the operations of:

    - transmitting on a transmission channel (C) the signal generated by said generator (10) as a result of the application of said opening and closing command signal (u(t)) to said at least one switch (5) so as to produce a signal transmitted on said channel (C); and

    - receiving said transmitted signal, detecting said modulating signal (s(t)) starting from said transmitted signal.

4. The method according to Claim 3, **characterized in that** said transmitted signal is received in a non-coherent way.

5. The method according to Claim 3, **characterized in that** it comprises the operation of observing the transitions in the chaotic dynamics of said received signal, said variations being indicative of said modulating signal.

6. The method according to Claim 4 or Claim 5, **characterized in that** said transmitted signal is subjected to discrimination by means of threshold comparison.

7. The method according to Claim 1, **characterized in that** said set of elements (1 to 4) for generating signals is configured as a Chua's circuit.

8. The method according to Claim 7, **characterized**

in that said Chua's circuit comprises three cascaded stages (1, 2, 3) each including a differential amplifier with negative feedback between the respective output and the respective negative input, and a capacitor connected between its output and an earth connection, and **in that** said at least one switch (5) is arranged between the output of the first (1) stage and the input of the second (2) stage.

9. The method according to any one of the preceding claims, **characterized in that** said generator is configured as a cellular neural network (CNN).

10. The method according to Claim 9, **characterized in that** said generator is configured as a state-controlled cellular neural network (SC-CNN).

11. The method according to any one of the preceding claims, **characterized in that**, with said at least one switch (5) brought stably into one of said open and closed states, the dynamics of signal generation exits the state of chaos, so that, as a consequence of the configuration, conservation of the character of chaos of said dynamics results from repeated opening and closing of said at least one switch (5).

12. The method according to any one of the preceding claims, **characterized in that** said at least one switch (5) is an electronic switch.

13. The method according to Claim 12, **characterized in that in that** said switch is a MOS transistor.

**Patentansprüche**

1. Ein Kommunikationsverfahren basierend auf der Generierung von chaotischen Signalen, wobei das Verfahren die folgenden Schritte aufweist:

    Vorsehen eines Generators für chaotische Signale (10), der einen Satz von Elementen (1 bis 4) aufweist, die gemäss einem Schema einer chaotischen Dynamik zur Signalgenerierung miteinander verbunden werden, wobei der Generator weiterhin zumindest einen Switch bzw. Schalter (5) aufweist, der in dem Verbindungsschema der Elemente (1 bis 4) eingefügt ist und selektiv zwischen einem geschlossenen Zustand und einem offenen Zustand schaltbar ist; wobei eins (1) der signalgenerierende Elemente (1 bis 4) aus dem Verbindungsschema ausgeschlossen wird, wenn der zumindest eine Schalter (5) in einem der offenen und geschlossenen Zustände ist, so dass das Öffnen und Schließen des Schalters (5) eine Variation in der chaotischen Dynamik der Generierung der Signale bewirkt, und

Anlegen eines Öffnungs- und Schließungsbefehlssignals (u(t)) an den zumindest einen Schalter (5), und zwar entsprechend einem Modulationssignal (s(t)), wobei die Variation in der chaotischen Dynamik der Signalgenerierung des Generators somit durch das Modulationssignal (s(t)) diktiert bzw, bestimmt wird,

**dadurch gekennzeichnet, dass** es die folgenden Schritte aufweist:

Verwenden, für das Modulationssignal (s(t)), eines Signals, das so angepasst ist, dass es eine Vielzahl von diskreten Pegeln einnehmen kann; und
Zuordnen, zu jedem der diskreten Pegel, eines entsprechenden unterschiedlichen Frequenzwertes ($f_u$) des Öffnungs- und Schließungsbefehlssignals (u(t)) oder
Bewirken, gemäss einem jeden der diskreten Pegel des Modulationssignals, einer entsprechenden Variation in der Frequenz des Öffnungs- und Schließungsbefehlssignals (u(t)).

2. Das Verfahren gemäss Anspruch 1, **dadurch gekennzeichnet, dass** es die folgenden Schritte aufweist:

Verwenden, für das Modulationssignal (s(t)) eines binären Signals angepasst, um einen ersten und zweiten Pegel anzunehmen: und
Generieren des Öffnungs- und Schließungsbefehlssignals (u(t)) mit einer Frequenz die jeweils ansteigt und sinkt in Abhängigkeit davon, ob das binäre Modulationssignal (s(t)) den ersten oder den zweiten Pegel einnimmt.

3. Verfahren gemäss einem der Ansprüche 1 oder 2, **dadurch gekennzeichnet, dass** es weiterhin die folgenden Schritte aufweist:

Senden, auf einem Übertragungskanal (C), des Signals, das durch den Generator (10) als Folge des Anlegens des Öffnungs- und Schließungsbefehlssignals (u(t)) an den zumindest einen Schalter (5) generiert wurde, um so ein Signal gesendet auf dem Kanal (C) zu erzeugen; und
Empfangen des gesendeten Signals, detektieren des modulierten Signals (s(t)) mit Beginn des gesendeten Signals.

4. Verfahren gemäss Anspruch 3, **dadurch gekennzeichnet, dass** das gesendete Signal auf nicht kohärente Weise empfangen wird.

5. Verfahren gemäss Anspruch 3, **dadurch gekennzeichnet, dass** es den Schritt des Beobachtens der Übergänge in der chaotischen Dynamik des empfangenen Signals aufweist, wobei die Variationen anzeigend für das Modulationssignal sind.

6. Verfahren gemäss Anspruch 4 oder 5, **dadurch gekennzeichnet, dass** das gesendete Signal einer Diskriminierung bzw. Unterscheidung mittels eines Schwellenwertvergleiches ausgesetzt ist.

7. Verfahren gemäss Anspruch 1, **dadurch gekennzeichnet, dass** der Satz von Elementen (1 bis 4) zur Generierung von Signalen als eine Chua-Schaltung konfiguriert ist.

8. Verfahren gemäss Anspruch 7, **dadurch gekennzeichnet, dass** die Chua-Schaltung drei kaskadierte Stufen (1, 2, 3), von denen jede einen Differenzverstärker mit einem negativen Feedback bzw. Rückkoppelung zwischen dem jeweiligen Ausgang und dem jeweiligen negativen Eingang besitzt, und einen Kondensator, der zwischen dessen Ausgang und einer Erdungsverbindung verbunden ist, aufweist, und **dadurch gekennzeichnet ist, dass** der zumindest eine Schalter (5) zwischen dem Ausgang der ersten (1) Stufe und dem Eingang der zweiten (2) Stufe angeordnet ist.

9. Verfahren gemäss einem der vorhergehenden Ansprüche, **dadurch gekennzeichnet, dass** der Generator als ein zellulares neuronales Netzwerk (cellular neural network) (CNN) konfiguriert ist.

10. Verfahren gemäss Anspruch 9, **dadurch gekennzeichnet, dass** der Generator (1) als ein zustandskontrolliertes zellulares neuronales Netzwerk (state controlled cellular neural network (SC-CNN)) konfiguriert ist.

11. Verfahren gemäss einem der vorhergehenden Ansprüche, **dadurch gekennzeichnet, dass** dadurch, dass der zumindest eine Schalter (5) stabil in einen der geöffneten und geschlossenen Zustände gebracht wird, die Dynamik der Signalgenerierung den Chaoszustand verlässt, so dass als Konsequenz der Konfiguration eine Konservierung des Chaoscharakters der Dynamik vom wiederholten Öffnen und Schließen des zumindest einen Schalters (5) resultiert.

12. Verfahren gemäss einem der vorhergehenden Ansprüche, **dadurch gekennzeichnet, dass** der zumindest eine Schalter (5) ein elektronischer Schalter bzw. Switch ist.

13. Verfahren gemäss Anspruch 12, **dadurch gekennzeichnet, dass** der Schalter ein MOS-Transistor ist.

## Revendications

1. Procédé de communication basé sur la génération de signaux chaotiques, comportant les opérations consistant à :

   - fournir un générateur de signaux chaotiques (10) comportant un ensemble d'éléments (1 à 4), qui sont reliés ensemble conformément à un schéma de dynamique chaotique de génération de signaux, ledit générateur comportant en outre au moins un commutateur (5) inséré dans le schéma de connexion desdits éléments (1 à 4) et pouvant commuter de manière sélective entre un état fermé et un état ouvert, au moins un (1) parmi lesdits éléments de génération de signaux (1 à 4) étant exclu dudit schéma de connexion lorsque ledit au moins un commutateur (5) est dans l'un parmi lesdits états ouvert et fermé, de sorte que l'ouverture et la fermeture dudit commutateur (5) provoque une variation de la dynamique chaotique de génération desdits signaux, et
   - appliquer audit au moins un commutateur (5) un signal de commande d'ouverture et de fermeture (u(t)) correspondant à un signal de modulation (s(t)), la variation de la dynamique chaotique de génération de signaux dudit générateur étant ainsi dictée par ledit signal de modulation (s(t)),

     **caractérisé en ce qu'**il comporte les opérations consistant à :

   - utiliser, en tant que ledit signal de modulation (s(t)), un signal adapté pour adopter une pluralité de niveaux discrets, et
   - associer, à chacun desdits niveaux discrets, une valeur différente correspondante de fréquence (f$_u$) dudit signal de commande d'ouverture et de fermeture (u(t)), ou
   - provoquer, conformément à chacun desdits niveaux discrets dudit signal de modulation, une variation correspondante de la fréquence dudit signal de commande d'ouverture et de fermeture (u(t)).

2. Procédé selon la revendication 1, **caractérisé en ce qu'**il comporte les opérations consistant à :

   - utiliser, en tant que ledit signal de modulation (s(t)), un signal binaire adapté pour adopter un premier et un second niveau, et
   - générer ledit signal de commande d'ouverture et de fermeture (u(t)) à l'aide d'une fréquence qui augmente et diminue respectivement selon que le signal de modulation binaire (s(t)) prend ledit premier ou ledit second niveau.

3. Procédé selon l'une quelconque des revendications 1 ou 2, **caractérisé en ce qu'**il comporte en outre les opérations consistant à :

   - transmettre sur un canal de transmission (C) le signal généré par ledit générateur (10) en résultat de l'application dudit signal de commande d'ouverture et de fermeture (u(t)) à ledit au moins un commutateur (5) de manière à produire un signal transmis sur ledit canal (C), et
   - recevoir ledit signal transmis, détecter ledit signal de modulation (s(t)) en commençant à partir dudit signal transmis.

4. Procédé selon la revendication 3, **caractérisé en ce que** ledit signal transmis est reçu d'une manière non-cohérente.

5. Procédé selon la revendication 3, **caractérisé en ce qu'**il comporte l'opération consistant à observer les transitions de la dynamique chaotique dudit signal reçu, lesdites variations étant indicatives dudit signal de modulation.

6. Procédé selon la revendication 4 ou la revendication 5, **caractérisé en ce que** ledit signal transmis est soumis à une discrimination par l'intermédiaire d'une comparaison de seuil.

7. Procédé selon la revendication 1, **caractérisé en ce que** ledit ensemble d'éléments (1 à 4) destiné à générer des signaux est configuré en tant que circuit de Chua.

8. Procédé selon la revendication 7, **caractérisé en ce que** ledit circuit de Chua comporte trois étages montés en cascade (1, 2, 3), chacun incluant un amplificateur différentiel ayant une rétroaction négative entre la sortie respective et l'entrée négative respective, et un condensateur relié entre sa sortie et une connexion à la masse, et **en ce que** ledit au moins un commutateur (5) est agencé entre la sortie du premier (1) étage et l'entrée du deuxième (2) étage.

9. Procédé selon l'une quelconque des revendications précédentes, **caractérisé en ce que** ledit générateur est configuré en tant que réseau neuronal cellulaire (CNN).

10. Procédé selon la revendication 9, **caractérisé en ce que** ledit générateur est configuré en tant que réseau neuronal cellulaire à état commandé (SC-CNN).

11. Procédé selon l'une quelconque des revendications précédentes, **caractérisé en ce que**, à l'aide dudit au moins un commutateur (5) amené de manière stable dans l'un desdits états ouvert et fermé, la dynamique de génération de signaux quitte l'état de chaos, de sorte que, en tant que conséquence de la configuration, la conservation du caractère de chaos de ladite dynamique résulte de l'ouverture et de la fermeture répétée dudit au moins un commutateur (5).

12. Procédé selon l'une quelconque des revendications précédentes, **caractérisé en ce que** ledit au moins un commutateur (5) est un commutateur électronique.

13. Procédé selon la revendication 12, **caractérisé en ce que** ledit commutateur est un transistor MOS.

Fig. 1

Fig.2

EP 1 223 718 B1

(a)

A

B

C

100 200 300 400 500 600 700 800 900 1000
Frequency (Hz)

(b)

A

B

C

100 200 300 400 500 600 700 800 900 1000
Frequency (Hz)

(c)

A

B

C

100 200 300 400 500 600 700 800 900 1000
Frequency (Hz)

Fig.3

Fig.5

10

N

C

R

s*(t)

Fig. 4